# EUROPEAN PATENT APPLICATION

(11) **EP 1 095 982 A1**
(43) Date of publication of application: **02.05.2001**
(21) Application number: 00309148.5
(22) Date of filing: 17.10.2000
(51) Int. Cl.: C08L 67/02, C08F 279/02, C08F 257/02, C08F 285/00, C08L 51/04

(54) **Impact modifier concentrates for amorphous aromatic polyester**

(30) Priority: 28.10.1999 US 162184 P
(71) Applicant: ROHM AND HAAS COMPANY, Philadelphia, Pennsylvania 19106-2399 (US)
(72) Inventor: Albert, Keith Allen, Marlton, New Jersey 08053 (US); Troy, Edward Joseph, Bristol, Pennsylvania 19007 (US); Brown, Stuart James, Marlton, New Jersey 08053 (US); Crook, Evan Haney, Cherry Hill, New Jersey 08003 (US)
(74) Representative: Buckley, Guy Julian

(57) **Abstract**

Impact modifier concentrates that produce transparent, high Dynatup impact strength blends with amorphous, aromatic polyesters are described. Impact modifier concentrates provide amorphous, aromatic polyesters articles having better clarity than similar articles prepared with comparable powdered impact modifiers. The impact modifier concentrates are blends of polyesters with core-shell polymers with (A) a core composed principally of rubbery polymers, such as copolymers of diolefins with vinyl aromatic monomers, such as copolymers of butadiene with styrene, (B) an intermediate stage composed principally of hard polymers, such as polymers or copolymers of vinyl aromatic monomers, and (C) a shell composed principally of vinyl aromatic copolymers that contain hydroxyl functional groups or their equivalents (e.g. styrene/hydroxyalkyl (meth)acrylate copolymers).

## Description

### BACKGROUND

The present invention relates to an impact modifier composition which provides an improved balance of impact resistance and optical clarity to amorphous aromatic polyester resin (hereafter referred to as polyester). More specifically, the present invention concerns an impact modifier composition which contains a rubbery core, an intermediate hard stage, and a shell containing a hydroxyl group or another functional group which acts in a similar manner as the hydroxyl group. The present invention also relates to concentrates of the impact modifiers of the present invention blended with polyesters. The present invention also relates to a process for preparing impact modifier concentrates and using these concentrates to provide polyester articles having improved dispersion and clarity.

Polyesters (e.g., polyethylene terephthalate, polybutylene terephthalate, etc.) exhibit various excellent properties such as resistance to temperature, chemicals, weathering, radiation and burning and also exhibit excellent clarity (in amorphous form), reasonable cost, as well as moldability. Accordingly, polyesters are used for various purposes (e.g., fibers, films, molded and extruded products, etc.). The impact resistance of the polyester, however, is less than satisfactory. Plastics such as poly (butylene terephthalate) (PBT) and poly(ethylene terephthalate) (PET) have insufficient impact strength, and many attempts have been made to improve the impact strength. Many agents have been proposed to improve the impact strength. These are added to resins and subjected to melt-blending.

Various attempts have been made using conventional fibrous inorganic fillers (e.g., glass fiber, asbestos fiber, etc.) to improve the impact resistance of polyester. Even when these methods are implemented, however, the impact resistance improvement is less than satisfactory and clarity in amorphous polyesters is adversely affected.

Various techniques wherein rubbery polymers or rubber- containing polymers are mixed with polyesters have been developed to improve the impact resistance of polyesters and thermoplastic materials. Specifically, certain core-shell polymers comprising a core made of rubbery polymer and a shell, around the core, made of a glassy polymer are excellent agents for improvement of impact strength of polyesters where clarity is not an object.

When these prior art methods are used, the polyester resin generally exhibits poor compatibility with the shell of the rubber-containing polymer, and therefore impact resistance is not fully optimized. Even when these prior art core-shell modifiers are added to amorphous polyesters and found to produce ductile, notched breaks, the clarity of amorphous polyester resins is destroyed. An amorphous polyester may contain a small amount of crystallinity, but the level must be low enough so that clarity is not adversely affected. Further, although the polyester may be crystallized under certain conditions, in the present invention the molding and cooling conditions are such that crystallization (and loss of clarity) is avoided.

U.S. patent application 09/277,002 which is assigned to the same corporate entity and which is incorporated by reference herein, discloses the impact modifiers of the present invention but does not teach or suggest the preparation of impact modifiers in a concentrated form.

Lane, U.S. Patent 4,034,013 teaches core/shell polymers functionalized with an epoxy group, such as a shell of methyl methacrylate/glycidyl methacrylate, to improve the melt strength of polyesters. Although Lane broadly teaches butadiene-based elastomers with optional minor amounts of styrene in the core and teaches styrene as a major component of the outer stage, she does not teach or suggest a solution to preparing an efficient impact modifier which will retain clarity in the amorphous polyester. Lane also does not teach or suggest the preparation of impact modifiers in a concentrated form.

Kishimoto et al., Japanese Kokai 54-48850, disclose butadiene-based core/shell polymers with hydroxyalkyl groups in the shell portion as modifiers for crystalline polyesters, such as poly(butylene terephthalate), but do not teach the means to modify such core/shell polymers to make them useful as impact modifiers in clear, amorphous polyesters. Kishimoto et al. do not teach or suggest the preparation of impact modifiers in a concentrated form.

Carson et al., U.S. Patent 5,321,056 teach impact modifiers which produce transparent, high notched Izod impact strength blends with amorphous aromatic polyesters. Carson's impact modifiers are core-shell polymers with cores comprised mainly of rubbery polymers of diolefins and vinyl aromatic monomers and shells comprised mainly of vinyl aromatic monomers and monomers containing a hydroxyl group. Although Carson provides for significantly improved impact strength of clear, amorphous aromatic polyester, a need still exists for an impact modifier that can provide an improved balance of properties between impact strength and optical clarity. Specifically, a need exists to reduce or eliminate the blue/yellow hue or tint that often results from blending such modifiers in amorphous aromatic polyester resins. Carson et al. also does not teach or suggest the preparation of impact modifiers in a concentrated form.

One object of the present invention is to provide an impact modifier concentrate to provide excellent toughness while not detracting from clarity in amorphous polyester blends. Another object of the present invention is to provide an impact modifier concentrate that disperses readily in amorphous polyester blends using conventional plastics processing equipment. Another object of the present invention is to provide a process for preparing impact modifier concentrate pellets for preparing impact modified amorphous polyester blends. Another object of the present invention is to provide a composition for improving the impact strength of polyesters, such as PET or PET copolyesters, when they are processed into clear, tough objects while retaining their amorphous nature. Another object is to provide a concentrate which will also overcome the embrittlement caused by physical aging which commonly occurs in amorphous aromatic polyesters when conditioned at temperatures approaching glass transition temperature (Tg). A still further object is to provide clear amorphous extrusion/melt shaped or injection molded PET or PET copolyester articles.

### STATEMENT OF INVENTION

In the present invention, the impact strength of amorphous aromatic polyesters is increased substantially by the addition of certain core-shell modifier concentrates containing amorphous aromatic polyesters and impact modifiers. The present invention also provides a process for preparing these concentrates. Specifically, the present invention provides impact modifiers in a concentrated form that disperse more readily in amorphous aromatic polyesters than the powdered impact modifier. These and other objects as will become apparent from the following disclosure are achieved by the present invention.

The impact modifier concentrate of this invention is a mixture of polyester and a core-shell polymer, the core-shell polymer having (A) a rubbery core such as a copolymer containing a diolefin, preferably a 1,3-diene, (B) an intermediate stage comprised mainly of a hard polymer such as a polymer containing a vinyl aromatic monomer, and (C) a shell comprised mainly of a vinyl aromatic monomer (such as styrene), and hydroxyalkyl (meth)acrylate or, in the alternative, another functional monomer which acts in a manner similar to the hydroxyalkyl (meth)acrylate).

In a first aspect of the present invention, the core-shell impact modifier concentrate includes:
(I) from 20 to 70 parts of at least one amorphous aromatic polyester or copolyester having a refractive index of from 1.55 to 1.60; and
(II) from 30 to 80 parts of at least one core-shell impact modifier including
   (A) from 15 to 85 parts of a core comprising from 40 to 60 percent by weight of units derived from at least one vinyl aromatic monomer, from 20 to 60 percent by weight of units derived from at least one 1,3-diene, up to 10 percent by weight of units derived from at least one copolymerizable vinyl or vinylidene monomer, and up to 5 percent by weight of at least one graft-linking or cross-linking monomer;
   (B) from 10 to 50 parts of an intermediate stage comprising at least 25 percent by weight of units derived from at least one vinyl aromatic monomer; and
   (C) from 5 to 35 parts of an outer shell comprising from 2 to 40 percent by weight of units derived from at least one hydroxyalkyl (meth)acrylate, from 60 to 98 percent by weight of units derived from at least one vinyl aromatic monomer, and up to 25 percent by weight in the shell of units derived from one or more copolymerizable vinyl or vinylidene monomer, and up to 5 percent by weight of units derived from at least one graft-linking or cross-linking monomer;
   the core-shell impact modifier having a refractive index of from 1.55 to 1.60.

A further variation of the impact modifier structure in the concentrate is to provide within the core (A): (1) an inner hard stage and, (2) an outer rubbery stage. The inner hard stage comprises at least 80 percent of units derived form at least one vinyl aromatic monomer, up to 20 percent of units derived from at least one other copolymerizable vinyl or vinylidene monomer, up to 20 percent by weight of units derived from at least one 1,3-diene, and up to 5 percent by weight of units derived from at least one graft-linking or cross-linking monomer.

The outer rubbery stage comprises up to 60 percent by weight of units derived from a vinyl aromatic monomer, at least 30 percent by weight of units derived from at least one 1,3-diene, up to 10 percent by weight of units derived from at least one compolymerizable vinyl or vinylidene monomer, and up to 5 percent by weight of units derived from at least one graft-linking or cross-linking monomer.

In a second aspect of the present invention, the core-shell impact modifier concentrate includes
(I) from 50 to 70 parts of at least one amorphous aromatic polyester or copolyester having a refractive index of from 1.55 to 1.60; and
(II) from 30 to 50 parts of a core-shell impact modifier including
   (A) from 50 to 70 parts of a core including
      (1) from 10 to 50 parts based upon the core-shell impact modifier of an inner stage comprising at least 80 percent of units derived from styrene, up to 20 percent of units derived from at least one other copolymerizable vinyl or vinylidene monomer, up to 20 percent by weight of units derived from 1,3-butadiene, and up to 5 percent by weight of units derived from at least one graft-linking or cross-linking monomer; and
      (2) from 5 to 75 parts based upon the impact modifier of an outer stage comprising up to 60 percent by weight of units derived from styrene, at least 30 percent by weight of units derived from 1,3-butadiene, up to 10 percent by weight of units derived from at least one copolymerizable vinyl or vinylidene monomer, and up to 5 percent by weight of units derived from at least one graft-linking or cross-linking monomer;
   (B) from 20 to 30 parts of an intermediate stage comprising at least 25 percent by weight of units derived from styrene; and
   (C) from 10 to 20 parts of an outer shell comprising from 2 to 40 percent by weight of units derived from hydroxyethyl (meth)acrylate, from 60 to 98 percent by weight of units derived from styrene, and up to 25 percent by weight in the shell of units derived from one or more copolymerizable vinyl or vinylidene monomer, and up to 5 percent by weight of units derived from at least one graft-linking or cross-linking monomer;
   the core-shell impact modifier having a refractive index of from 1.55 to 1.60.

In a third aspect of the present invention, there is provided a process for a preparing a core-shell impact modifier concentrate pellet comprising the steps of:
(a) melt blending
   from 10 to 90 parts of the core-shell impact modifier of the previous aspects of the present invention, with
   from 10 to 90 parts of an amorphous aromatic polyester or copolyester having a refractive index of from about 1.55 to about 1.60; and
(b) pelletizing the melt blend.

In a fourth aspect of the present invention, there is provided a clear amorphous polyester or copolyester blend including (a) from 10 to 90 parts of an amorphous aromatic polyester or copolyester having a refractive index of from about 1.55 to about 1.60; and (b) from 10 to 90 parts of the core-shell impact modifier concentrate of the first aspect of the present invention, wherein the total weight ratio of impact modifier to amorphous polyester or copolyester in the blend is in the range of from 1/99 to 30/70.

A still further aspect of the invention comprises molded parts, bottles, bottle preforms, sheet, films, pipes, foams, containers, profiles, or other articles prepared in accordance with the above-mentioned cocnetrates and blends.

As used throughout this document, the term "stage" is intended to encompass its broadest possible meaning, including the meaning conveyed in prior art such as U.S. Patent 3,793,402, U.S. Patent 3,971,835, U.S. Patent 5,534,594, and U.S. Patent 5,599,854 , which offer various means for achieving "staged" polymers.

### DETAILED DESCRIPTION OF THE INVENTION

It has been found that certain core-shell impact modifiers produce clear, and unexpectedly tough blends with amorphous aromatic polyesters. These modifiers produce a large increase in impact strength, while maintaining excellent optical clarity of the polyesters. These modifiers have (A) a core composed principally of rubbery polymers, such as copolymers of diolefins with vinyl aromatic monomers, such as copolymers of butadiene with styrene, (B) an intermediate stage composed principally of hard polymers, such as polymers or copolymers of vinyl aromatic monomers, and (C) a shell composed principally of vinyl aromatic copolymers that contain hydroxyl functional groups or their equivalents (e.g. styrene/hydroxyalkyl (meth)acrylate copolymers). For example, the core-shell impact modifiers (i.e. "modifiers") which give this unexpected result contain shells derived from copolymers of vinyl aromatic monomers with certain hydroxyalkyl (meth)acrylates, for example, hydroxyethyl (meth)acrylate (HEMA), hydroxypropyl (meth)acrylate (HPMA), 4-hydroxybutyl acrylate, ethyl alpha-hydroxymethylacrylate, or hydroxyethyl acrylate (HEA), or other copolymerizable monomers containing one or more hydroxyl groups, such as allyl cellosolve, allyl carbinol, methylvinyl carbinol, allyl alcohol, methallyl alcohol, and the like. Also included are other monomers which function in a similar manner, for example, glycidyl methacrylate (GMA), 3,4-epoxybutyl acrylate, acrylonitrile, methacrylonitrile, beta-cyanoethyl methacrylate, beta-cyanoethyl acrylate, cyanoalkoxyalkyl (meth)acrylates, such as omega-cyanoethoxyethyl acrylate, or omega-cyanoethoxyethyl methacrylate, (meth)acrylamides, such as methacrylamide or acrylamide, N-monoalkyl (meth)acrylamides, such as N-methylacrylamide or N-t-butylacrylamide or N-ethyl (meth)acrylamide, or vinyl monomers containing an aromatic ring and an hydroxyl group, preferably non-phenolic, such as vinylphenol, para-vinylbenzyl alcohol, meta-vinylphenethyl alcohol, and the like. Styrene homopolymer and other styrene copolymers and terpolymers, such as styrene/methyl methacrylate are very much less effective.

The monomer concentrations in the core, intermediate stage and shell of the impact modifier composition are adjusted to provide a refractive index (RI) to match that of the polyesters with which they are blended (i.e. 1.55 to 1.60). This produces a clear blend under processing conditions which will maintain the polyester in its amorphous form. Almost all rubbery polymers (e.g. cores) have RI's well below this range. Therefore it is necessary that the rubber phase concentration of the impact modifier composition be kept relatively low and the other components of the impact modifier be used to bring the RI into the desired range. However, the impact strength obtainable with a given concentration of any core-shell impact modifier tends to vary directly with the amount of rubber polymer in the modifier. This means that high RI modifiers having low rubber contents have to be exceptionally efficient to produce good toughening.

From a practical standpoint the most desirable monomer to produce rubbery polymer for this application is butadiene whose homopolymer has a RI= 1.52. It has the best combination of RI, cost, stability, and processability. For the same reasons, styrene is the most desirable component for the rest of the modifier. However, even if butadiene and styrene were the only components of the modifier, a butadiene/styrene ratio ranging from 50/50 to 20/80 would be required for the impact modifier RI to be in the 1.55 to 1.60 range needed for matching the RI's of amorphous, aromatic polyesters. One skilled in the art of impact modification would expect a 50% concentration of butadiene to be very low for good core-shell impact modifier efficiency. The results found herein for modification of polyesters with such functionalized "rubber-poor" modifiers are surprisingly good.

In response to the need to match RI's of amorphous aromatic polyesters and simultaneously have excellent impact modifier efficiency, U.S. Patent No. 5,321,056 reports that when low concentrations of certain hydroxyalkyl (meth)acrylates are copolymerized with aromatic vinyl monomers to form the shell of core-shell impact modifiers having RI's in the 1.55 to 1.58 range, very high notched Izod impact strengths are obtained with amorphous polyesters at 30% or lower modifier loadings, and preferably at from 5 to 20% loadings. Substitution of the hydroxyalkyl methacrylate with other functional monomers promoting compatibility of the shell with the polyester will give similar results in impact improvement and maintenance of clarity. The impact modifier composition of the present invention provides improved optical properties over the polymers reported in U.S. Patent No. 5,321,056, while maintaining the reported excellent impact modifier efficiency of the compositions.

The requirement for a "rubber-poor" modifier can be relaxed somewhat if the vinyl aromatic monomer is changed from styrene, vinyl toluene, para-methylstyrene, monochlorostyrene and the like to one of high refractive index, viz., the polybrominated vinyl aromatics or the polycyclic vinyl aromatics.

The core of the impact modifier composition of the present invention is a rubbery polymer and generally comprises a copolymer of butadiene and a vinyl aromatic monomer. The rubbery polymer may include diene rubber copolymers (e.g., butadiene-styrene copolymer, butadiene-styrene-(meth)acrylate terpolymers, butadiene-styrene-acrylonitrile terpolymers, isoprene-styrene copolymers, etc.). Of the afore-mentioned rubbery polymers, those which can be produced as a latex are especially desirable. In particular, a butadiene-vinyl aromatic copolymer latex obtained as a result of emulsion polymerization is preferred. In the core, a partially crosslinked polymer can also be employed if crosslinking is moderate. Further, at least one of a cross- or graft- linking monomer, otherwise described as a multi-functional unsaturated monomer, can also be employed. Such monomers include divinylbenzene, diallyl maleate, butylene glycol diacrylate, allyl methacrylate, and the like.

The ratio of comonomers in the core depends on the desired core-shell ratio and hardness of the rubber phase. The ratio range of butadiene to the vinyl aromatic in the core polymer is 70/30 to 20/80 (parts by weight). If the quantity of butadiene is below 20 parts by weight, it is difficult to improve the impact resistance. If the quantity of butadiene exceeds 70 parts by weight, on the other hand, it is difficult to obtain a high enough RI modifier to match that of the polyester, unless the vinyl aromatic monomer is of high refractive index and selected from the polybrominated or polycyclic monomers described above. Optionally, a small concentration, from 0.01 up to 5, and preferably from 0.1 up to 2 percent, by weight of a crosslinking monomer, such as divinyl benzene or butylene glycol dimethacrylate is included, and optionally 0.01 to 5 percent by weight of a graftlinking monomer for tying the core and shell together, such as allyl maleate may be included in the rubbery core polymer. Further examples of crosslinking monomers include alkanepolyol polyacrylates or polymethacrylates such as ethylene glycol diacrylate, ethylene glycol dimethacrylate, butylene glycol diacrylate, oligoethylene glycol diacrylate, oligoethylene glycol dimethacrylate, trimethylolpropane diacrylate, trimethylolpropane dimethacrylate, trimethylolpropane triacrylate or trimethylolpropane trimethacrylate, and unsaturated carboxylic acid allyl esters such as allyl acrylate, allyl methacrylate or diallyl maleate.

As the intermediate stage of the impact modifier composition, hard polymers or copolymers of vinyl aromatic monomers are preferred. Generally, polymers or copolymers with a Tg above room temperature can be used. Examples of suitable vinyl aromatic monomers include vinyl aromatic monomers such as styrene, alpha-methyl styrene, para-methyl styrene, chlorostyrene, vinyl toluene, dibromostyrene, tribromostyrene, vinyl naphthalene, isopropenyl naphthalene, divinyl benzene and the like.

As the shell of the impact modifier composition, a hydroxyl-group-containing monomer is preferred to be employed. When a hydroxyl group is introduced to the shell polymer, a vinyl monomer containing an active double-bond segment and a hydroxyl group (hereafter referred to as hydroxyl-group-containing monomer) is copolymerized with another copolymerizable vinyl monomer. Examples of the aforementioned hydroxyl-group-containing monomers include hydroxyalkyl (meth)acrylate or alpha-hydroxymethylacrylate esters, such as hydroxyethyl (meth)acrylate, hydroxypropyl (meth)acrylate, or ethyl hydroxymethylacrylate, allyl derivatives of hydroxyl-group containing compounds, such as allyl cellosolve, allyl carbinol, methylvinyl carbinol, allyl alcohol, methallyl alcohol, and the like, vinylphenol, para-vinylbenzyl alcohol, meta-vinylphenethyl alcohol, and the like.

Although the hydroxyalkyl (meth)acrylate monomers are preferred for reasons of safety in handling (over the nitrile-containing monomers) or availability (over other monomers taught herein), other monomers which function in a similar manner may be employed, for example, glycidyl methacrylate (GMA), 3,4- epoxybutyl acrylate, acrylonitrile, methacrylonitrile, beta-cyanoethyl methacrylate, beta-cyanoethyl acrylate, cyanoalkoxyalkyl (meth)acrylates, such as omega-cyanoethoxyethyl acrylate, or omega-cyanoethoxyethyl methacrylate, (meth)acrylamide, or N-monoalkyl (meth)acrylamide and the like.

Vinyl aromatic monomers to be copolymerized with the aforementioned hydroxyl-group-containing monomers include vinyl aromatic monomers such as styrene, alpha-methyl styrene, para-methyl styrene, chlorostyrene, vinyl toluene, dibromostyrene, tribromostyrene, vinyl naphthalene, isopropenyl naphthalene, and the like. The hydroxyl-group-containing monomers and vinyl aromatic monomers may be used either singly or in combination of two or more.

In the shell, the ratio between the hydroxyl- group-containing monomer (e.g. HEMA, HPMA) or a monomer which performs in a similar manner (e.g. MAN, AN, or GMA), and the other copolymerizable vinyl monomers (e.g. styrene, tribromostyrene) ranges from 2/98 to 40/60 parts by weight, and preferably 3/97 to 30/70 parts by weight. Below 2 parts, the performance is not improved over the vinyl aromatic homopolymer shell, and above that level, side reactions, such as crosslinking, may occur, with adverse effects on dispersion.

Optionally, one or more additional monomers may be added to the shell to adjust the RI. This additional monomer is preferably an alkyl (meth)acrylate (such as C₁-C₄ alkyl (meth) acrylate, and the like), but it can be any monomer which copolymerizes with the other two monomers used in the core polymer and produces a terpolymer which permits the RI of the impact modifier to match that of the polyesters with which it is blended.

The additional monomer may include one or more of any of the following monomers: acrylonitrile, methacrylonitrile, methyl acrylate, ethyl acrylate, propyl acrylate, butyl acrylate, 2-ethylhexyl acrylate, decyl acrylate, methyl methacrylate, ethyl methacrylate, divinyl benzene and the like.

The resultant composition preferably has a particle size range of 75 to 300 nm, more preferably from 140 nm to 230 nm, and a RI range of 1.55 to 1.60.

The impact modifiers of the present invention contain 15-85 parts, preferably 25-75 parts, most preferably 50-70 parts by weight of the aforementioned rubbery core; 10-50 parts, preferably 15-45 parts, most preferably 20-30 parts by weight of the intermediate stage, and 5-35 parts, preferably 10-30, most preferably 10-20 parts by weight of the shell hydroxyl-group-containing polymer (total: 100 parts by weight).

When the impact modifiers of the present invention are manufactured, conventional methods for manufacturing ordinary rubber-modified polymers (e.g., ABS resin, impact resistant polystyrene, etc.) may be effectively employed. These impact modifiers may be prepared by emulsion polymerization. The preferred procedure is emulsion polymerization using soaps, initiators and processing conditions normally used for making MBS polymers, that is, impact modifiers based on butadiene-styrene rubbers with one or more stages of styrene or methyl methacrylate polymers. Isolation from the emulsion can be achieved by standard procedures such as spray drying or coagulation. For example, a polymer latex characterized by an appropriate particle size and degree of conversion is produced by means of emulsion polymerization (e.g. copolymerizing a hydroxyl-group-containing monomer with another copolymerizable vinyl monomer in the presence of a polymerized rubber latex upon which a vinyl aromatic monomer has been polymerized or copolymerized to form an intermediate hard stage).

Further, the polymer can be prepared by a method wherein a core is uniformly graft-polymerized with an intermediate hard stage comprising at least one vinyl aromatic monomer, which is uniformly graft-polymerized with a hydroxyl-group-containing monomer and another copolymerizable vinyl monomer constituting the shell polymer.

Thus, when the impact modifier composition is manufactured, general free radical polymerization techniques (e.g., emulsion polymerization, solution polymerization, and suspension polymerization) may be employed so long as the resulting impact modifier composition is characterized by a core-shell structure wherein hydroxyl groups are preserved.

The impact modifier composition may be isolated from the reaction medium by any of several known processes. For example, when prepared in emulsion, the composition may be isolated by coagulation, including coagulation in an extruder from which the water is removed as a liquid, or by spray-drying. Additives such as thermal stabilizers and anti-oxidants may be added to the composition prior to, during or after, isolation.

It is important that no crystallization promoter is present in the composition since this invention is directed to compositions suitable for producing amorphous, non-crystalline articles. If substantial crystallization occurs in the process, the resultant articles become opaque and brittle. In some cases, such as with pipe, foam and profile extrusion, a small degree of crystallinity may be acceptable and can be achieved by control of the cooling cycle. However, in most cases it is preferred to prepare amorphous articles on standard injection molding and extrusion equipment. The type of articles to be produced, whether it be molded parts, bottles, films, foams, pipes, tubing, sheet or profiles, will govern the auxiliary equipment to be employed. For instance, to produce bottles, extrusion blow molding equipment is necessary. To produce film, blown film equipment is necessary.

The amorphous, aromatic polyesters, such as PET, and copolyesters, such as Eastman PETG (i.e., (poly)ethylene-co-1,4- cyclohexanedimethylene terephthalate), of this invention include poly (C₁ to C₆ alkylene terephthalates), alkylene naphthalene dicarboxylates, such as poly(ethylene naphthalene-2,6-dicarboxylate), and aromatic amorphous polyester which contains units derived from at least one aliphatic diol or cycloaliphatic diol or combinations of aliphatic diols and cycloaliphatic diols and one or more aromatic dibasic acids. Examples include polyethylene terephthalate (PET), polypentylene terephthalate, and the like, or an aromatic copolyester which contains units derived from two glycols (e.g., ethylene glycol, and cyclohexanedimethanol) or from two dibasic acids (e.g. terephthalic acid and isophthalic acid). Such polyesters may be obtained by polycondensing polyol components (e.g., ethylene glycol) with dicarboxylic acid components (e.g., terephthalic acid, isophthalic acid, naphthalenedicarboxylic acid, etc.), as well as mixtures consisting of two or more polyesters.

The modifiers and polyesters may be combined by melt blending in an extruder. The polyesters should be dried to 0.03% moisture content. A mix of the two components can be directly extruded or molded or the components can be combined in an initial blending step and the pellets from this blend can then be molded after drying to a 0.03% moisture content. The concentration of modifier in these polyester blends can range from 1 to 30% by weight and preferably from 5 to 20% by weight.

The core-shell impact modifiers of the present invention and polyesters may also be melt blended in an extruder to form the core-shell impact-modifier concentrates of the present invention. The amount of core-shell impact modifier in these concentrates can range from 30 to 80 parts, preferably from 30 to 65 parts, and most preferably from 30 to 50 parts with the remaining parts adding to 100 being polyester.

The concentrates in a pellet form are particularly useful for preparing clear, impact modified extruded polyester sheet. It is particularly desirable to prepare clear, impact modified extruded polyester sheet from concentrated impact modifier pellets than with "straight" impact modifier powders. In addition to providing better clarity, other advantages of preparing impact modified polyester sheets from concentrated pellets versus powder include: easier handling of pellets versus powder; lower dust and contamination; and better dispersibility resulting in smoother sheet having a greater aesthetic look.

The impact modifier concentrates of the present invention also disperse more readily than do "straight" modifier powders when blended with amorphous polyester resins in certain conventional plastics processing equipment. For example, we have suprisingly found that although the "straight" impact modifier powders are readily dispersed in polyester using twin screw extruders, we have suprisingly discovered that the "straight" powders do not disperse as readily in polyesters when blended using a single screw extruder.

The polyesters should be dried to 0.03% moisture content prior to preparing the concentrates. A mix of the polyester resin and modifiers can be directly blended or compounded and formed into pellets using conventional plastics processing equipment. Pellets from this blend can subsequently be blended with additional polyester using conventional plastics processing equipment for forming into articles after drying to a 0.03% moisture content.

The core-shell impact modifier concentrates of the present invention can be prepared by blending the and APET may be prepared by mixing the modifiers of the present invention with any commercial grade of polyester (e.g., APET or PETG) in a commercially available plastics compounding equipment. Typical polyester resins which can be used are any of those resins described earlier. A sheet grade polyester such as APET is preferred.

The amorphous aromatic polyester or copolyester which has an intrinsic viscosity of greater than or equal to 0.7 dl/g for best properties of molding and sheet processing, but for some uses, lower molecular weight polyesters having lower intrinsic viscosities may be employed. For preparing clear modified polyester sheet, intrinsic viscosity values in the range of 0.80 to 0.85 dl/g are particularly useful. (PET or PETG may decrease in intrinsic viscosity after melt processing; the values in the specification refer to the polyester as supplied, prior to processing). Articles such as containers, bottles, foam, or hollow parts may be extrusion blow molded, extruded or injection molded from polyester blends described herein.

The preferred method for making up a concentrate of modifier and a particular resin system is by use of a twin screw compounding equipment. Such equipment are readily sized and configured to provide the necessary functions (melt, mix, de-gas and pump) of the components in order to provide the impact modifier concentrates. Typical of such equipment include counter and co-rotating twin screw units wherein the polyester and impact modifier components are fed into the units using loss-in-weight (LWT) feeders. Two loss-in weight feeders can be used wherein one is calibrated and controlled to deliver the polyester resin. The second LWT feeder is calibrated and controlled to deliver the modifier, a powder, in the relative proportions for the desired concentrate. The impact modifier and resin loading is determined on a weight basis for the concentrate. The impact modifier loading may be varied from 5-80%. Above 50% impact modifier the concentrate loses material integrity in that the melt strength of the concentrate is reduced to a level wherein the extruded concentrate strand breaks with increased frequency. Above 50% the concentrate becomes frangible and therefor breaks easily. In this case a different type of pelletization is required, such as under water extrusion, so that high melt strength of the strand is not required.

The concentrate components can be fed into the first zone of a plastics processing melt-blending unit (compounder). The compounder can be operated at 28:1 L/D and configured to have a degassing port. It is preferred that the resin system is first dried at 120°C for 16 hours prior to introduction to the compounder. It is not necessary to pre-dry the impact modifier powder.

In preparing modified clear polyester blends wherein the impact modifiers are provided from the concentrates of the present invention, it is desirable that the concentrate pellets are re-crystallized prior to blending with a sheet grade of polyester. It is preferred that the concentrates are in pellet form as this facilitates blending at appropriate levels with polyester pellets to attain the desired final weight ratio of impact modifier in the polyester sheet.

Polyester resins blended with the concentrates of the present invention can be melt blended in a suitable extruder and formed into sheet using a die. Polyester sheets prepared with the impact modifier concentrates of the present invention have excellent contact and see-through clarity. The impact modified polyester sheets of the present invention can be prepared from the core-shell impact modifier concentrates of the present invention.

The clear polyester resin blends can also be extruded or molded into clear parts which have very high Dynatup impact strength, and exhibit ductile type failures and physical aging resistance. The required modifier concentration will depend on factors such as the molecular weight of the polyester, the impact strength desired, and the temperature at which the final object is utilized. Below 1% modifier concentration, no significant effect is seen.

Blending of concentrates and polyesters can be accomplished by melt extrusion in an extruder at temperatures of 193 °C to 288 °C, preferably 204 °C to 265 °C. For example, a high work, two stage screw which has a length/diameter ratio of 24/1, and a compression ratio of 3.0 to 3.5 gives a very adequate dispersion of the impact modifier in the polyester. A dwell time in the extruder of 1 to 5 minutes is adequate to insure complete mixing or dispersion under most conditions but of course lower and higher dwell times can certainly be used. The concentrate/polyester blends can be directly extruded into parts are pelletized into pellets for subsequent molding. If pellets are desired, it is preferred that the strands produced by extruder blending are pelletized and dried to a moisture content of less than 0.03 percent before molding.

The ingredients used to make the composition of the invention are dispersed uniformly and it has been found that melt blending the ingredients, by using such equipment as a melt extruder (e.g., single screw extruders or twin screw extruders) in a separate step prior to molding is desirable. The blended product may be pelletized (i.e., the extruded strand is quenched and cut), dried and used for subsequent molding purposes.

Other additives known in the art may be included in the composition at 1 to 30% by weight. These other additives may include antioxidants, flame retardants, reinforcing agents such as glass fiber, asbestos fiber and flake, mineral fillers, stabilizers, nucleating agents, ultraviolet light stabilizers, heat and light stabilizers, lubricants, dyes, pigments, toners, mold release agents, fillers, such as glass beads and talc, and the like. Minor amounts of other polymers (i.e. 1 to 10 percent by weight) can also be incorporated in the present composition, such as polyamides or polycarbonates. Most of these additives will adversely affect clarity. The additives listed above such as antioxidants, thermal stabilizers, fillers, pigments and flame retardant additives may be used in the composition of this invention provided they do not exert any adverse effect on the impact strength or clarity. It is preferred not to have glass fiber reinforcement in clear article applications or any additive which would decrease transparency. It is highly preferred that clear articles are produced.

The polyesters must be thoroughly dried prior to melt processing to minimize the rapid hydrolytic degradation known to occur at processing temperatures and to reduce molecular weight. The modifiers of the present invention are much less sensitive to hydrolytic degradation than the polyesters. Higher than necessary melt temperatures should be avoided during processing to keep the impact strength as high as possible. Melt cooling should be carried out as rapidly as possible to prevent polyester crystallization and the loss of clarity.

Aromatic amorphous polyesters are quite sensitive to embrittlement from physical aging, but this limitation is overcome by the modifiers herein (see Table 1). Therefore, polyester blends will now be able to compete successfully with polycarbonate, cellulosics, impact modified polyvinyl chloride, and the like for a broad range of applications where high clarity and toughness are needed in the absence of exceptional heat resistance.

The preferred poly(alkylene terephthalates) are polyethylene terephthalate (PET) and copolyesters of PET. Blends with other polyesters are also suitable. For example, blends of two or more polyesters may also be used, with polyester blends which have poly (ethylene terephthalate) being preferred.

The impact modifiers and concentrates according to this invention are also useful for preparing PET articles having various property improvements such as improving the cuttability of PET film, sheet, and various other articles containing the impact modifiers and concentrates of the present invention. Improved cuttability results smoother cut edges and longer-lasting cutting tools used in fabricating film, sheet, and various articles prepared from the polyester blends according the present invention. The impact modifiers and concentrates of the present invention also improve the de-nesting of articles or sheet made of PET containing these impact modifiers. De-nesting refers to the ability of stacked PET articles to be easily separated from one another. For example the impact modifiers and concentrates can influence the static charge and increase the surface roughness of the PET which affect how the stacked articles separate from one another.

The impact modifiers of the present invention are also useful for making PET bottles and PET bottle preforms. The thick walled preforms ordinarily are made by injection molding which requires that the impact modified resin has a suitably low viscosity. The preforms are subsequently stored and/or shipped for further blow molding into bottles, during which they are subject to breakage. As a result, preforms containing the impact modifiers of the present invention reduces breakage of such preforms.

The impact modifiers of the present invention are also useful for improving the impact resistance of certain clear polystyrene-based resins without substantially degrading the clarity. For example, these modifiers are useful for improving the impact resistance of polystyrene articles having a higher refractive index than that of the impact modifiers, wherein the polystyrene articles are thin (e.g., polystyrene cups and film having a thickness of less than one millimeter). At low levels, less than five weight percent, the impact modifiers also function as a processing aid to control melt viscosity and improve flow through processing equipment.

The impact modifiers of the present invention are also useful for modifying various resins that can react with the hydroxyl functionality within the modifier. Reactive resins include those which contain the following reactive groups under reactive conditions: acids, amides, esters, amines, isocyanates, anhydride, and glycidyl (epoxy). Examples include, but are not limited to, various resins modified with maleic anhydride such as polystyrene, polyethylene and polypropylene. Resins, such as polyurethanes, prepared by reactive injection molding (RIM) can also be modified using the impact modifiers of the present invention.

The impact modifiers of the present invention are also useful for modifying the impact resistance and processability of various resins wherein the hydroxyl functionality of the impact modifier increases its compatibility with such resins. Examples include polar polymers such as polyamides (nylons) and polycarbonates.

The impact modifiers of the present invention are also useful as rubber additives, for example for improving adhesion of polyester or steel fibers (e.g., cords) to rubber matrices in articles such as tires. The impact modifiers may further provide reinforcement for tires which don't require the use of carbon black, such as for white or colored tires.

One of the problems associated with blending typical acrylic and MBS impact modifiers into thermoplastic resins is that such modifiers, owing to their relatively soft character, reduce the stiffness of the thermoplastic resin. Because the impact modifiers of the present invention are harder than typical impact modifiers, the impact modifiers of the present invention affects the stiffness to a lesser degree.

### EXAMPLES

The following examples and comparative examples are presented to illustrate the invention, but the invention should not be limited by these examples. All parts and percentages are by weight unless otherwise indicated. The following abbreviations are employed in the examples:
Bd = butadiene
S = styrene
HEMA = hydroxy ethyl methacrylate
DVB = divinyl benzene.

### APPARATUS AND GENERAL PROCEDURE

Modifier compositions are melt blended with APET (Shell 8387) using a twin screw extruder. The clear amorphous strands are pelletized and the accumulated product recrystallized before re-extrusion into 0.0762 cm thick sheet. This sheet is then evaluated for impact strength at 23 °C using the Dynatup impact test (ASTM-D3763-93). The test is repeated on sheet test samples that have heat aged at 60 °C over a period of ten days to establish the relative retention of impact strength of the modified APET sheet.

Sheet samples are tested for light transmission and haze according to ASTM-D-1003.

The blue/yellow hue of the sheet samples are measured two ways. First, the "b" value of the Hunter L,a,b scale is measured. The Hunter b value is a measure yellowness-blueness, and the procedure for determining this value is provided in Instruction Manual: HUNTERLAB TRISTIMULUS COLORIMETER MODEL D25P-9 (rev. A). The second parameter measured is referred to as the Scattered Yellowness Index. The Scattered Yellowness Index is calculated according to the Yellowness Index procedure of ASTM-D-1925, using diffused (scattered) Transmission values instead of total Transmission values.

### EXAMPLE 1

A modifier based upon Example 12 of U.S. Patent 5,321,056, with minor modifications, was prepared according to the following procedure:

Charge 34.666 parts deionized water and 0.109 parts acetic acid to a stainless steel reactor capable of withstanding 200 psi (1.38 mPa) pressure. Begin stirring at 100 rpm and heating to 95 °C while sparging with nitrogen for 30 minutes. At 95 °C, turn off sparge and add 3.182 parts (33% solids) of a Bd/S (at a ratio of approximately 70:30) seed emulsion. Also add 2.016 parts of a 5% aqueous solution of sodium formaldehyde sulfoxylate, then rinse both with 2.092 parts deionized water. Evacuate the reactor to 260 mm Hg. At 95 °C, begin feeding butadiene [12.824 parts]., a mix of monomers [12.121 parts S and 0.252 parts DVB with a deionized water rinse of 1.356 parts], Dowfax 2A1 soap solution [ 3.528 parts at 10% solids] to the reactor over a 5 hour period. The 2% aqueous t-butyl hydroperoxide solution [4.143 parts] is added over 7.25 hours. The soap and tBHP solutions are uniform constant rate feeds. The monomer mix and Bd feeds change each hour as follows :
First hour = 0.00076 parts / minute S / DVB and .00008 parts / minute Bd
Second hour = 0.00055 parts / minute S / DVB and .00029 parts / minute Bd
Third hour = 0.00042 parts / minute S / DVB and .00042 parts / minute Bd
Fourth hour = 0.00025 parts / minute S / DVB and .00059 parts / minute Bd
Fifth hour = 0.00008 parts / minute S / DVB and .00076 parts / minute Bd
Continue the 2% aqueous t-butyl hydroperoxide solution feed after the monomer feeds and rinse are done. When all feeds are finished, hold 0.5 hours at 95 °C. Cool the reactor to 62 °C and vent to atmospheric pressure.

The shell is prepared by adding 0.657 parts of a 5% solution of sodium formaldehyde sulfoxylate to the reactor [rinse with 0.562 parts deionized water]. At 60 °C, begin feeding a mix of S [16.071 parts] and HEMA [2.169 parts] for 1.5 hour at a constant rate. Also begin feeding 1.369 parts of a 2% solution of t-butyl hydroperoxide for 1.5 hour at constant rate. After the 1.5 hour feed is in and rinse [1.264 parts deionized water] is added, chase with 2% solution of t-butyl hydroperoxide solution [1.094 parts] for four hours at constant rate, and 4 shots of a 5% solution of sodium formaldehyde sulfoxylate [0.525 parts total; 0.1313 parts per shot at 0, 1, 2 and 3 hours]. Add 0.575 parts sodium hydroxide solution [0.2% solid] and then add a 50% solids emulsion of Irganox 245 [0.180 parts], tris nonyl phenyl phosphite [0.180 parts] and dilauryl thiodipropionate [0.540 parts]. Cool the batch to 40 °C.

The RI of the resulting modifier composition was measured to 1.565 ± 0.002, using ASTM-D-542.

### EXAMPLE 2

A composition within the scope of the present invention was made according to the following procedure:

Charge 23.319 parts deionized water to a stainless steel reactor capable of withstanding 200 psi (1.38 mPa) pressure. Add 1.182 parts of a 5% aqueous solution of sodium formaldehyde sulfoxylate. Begin stirring at 130 rpm and heating to 85 °C while sparging with nitrogen (0.283 scmh) for 30 minutes. At 85 °C, turn off sparge and add 3.590 parts (33% solids) of a Bd/S (at a ratio of approximately 70:30) seed emulsion, rinse with 0.507 parts deionized water. Evacuate the reactor to 362-414 mm Hg. Begin feeding an emulsified mix of monomers, soap and water to the reactor over a 4.75 hour period. The emulsified monomer mix contains: 14.221 parts S, 0.269 parts DVB, 0.213 parts sodium dodecyl benzene sulfonate soap, 6.606 parts deionized water [and 1.014 parts deionized water rinse]. Feed rates for the emulsified monomer mix change over time: 1.75 hours at 0.1349 parts / minute, 1.25 hours at 0.0766 parts/ minute and 1.5 hours at 0.0152 parts / minute. Other feeds are started the same time as the emulsified monomer mix: Bd [12.368 parts] is fed over time starting at 1.75 hours after the start of the emulsified monomers [1.25 hours at 0.0522 parts / minute then 1.5 hours at 0.0938 parts / minute]; 2.377 parts of a 10% aqueous solution of sodium dodecyl benzene sulfonate solution is fed at a constant rate of 0.0088 parts / minute for 4.5 hours; 1.774 parts of a 5% aqueous t-butyl hydroperoxide- solution is added at a constant rate of 0.00657 parts/ minute for 4.5 hours. At the end of feeds , rinse with 1.267 parts deionized water.

After rinse is added, charge 0.625 parts of a 5% solution of sodium formaldehyde sulfoxylate to the reactor. Begin feeding an emulsified styrene charge for 2 hours at 0.1373 parts / minute [contains: 11.660 parts S. 0.153 parts sodium dodecyl benzene sulfonate, 0.035 parts t-butyl hydroperoxide, 4.628 parts deionized water (and 0.760 parts rinse of deionized water)].

After rinse is added, charge 0.070 parts of 5% solution of t-butyl hydroperoxide and 0.070 parts of 5% solution of sodium formaldehyde sulfoxylate to the reactor. Hold for 1 hour. Vent the reactor to atmospheric pressure. Begin a constant rate feed of emulsified monomers for 1 hour: 6.142 parts S, 0.840 parts HEMA, 0.014 parts DVB, 0.021 parts t-butyl hydroperoxide, 0.101 parts sodium dodecyl benzene sulfonate , 3.191 parts deionized water (rinse with 0.507 parts deionized water). Feed shots of 5% solution of t-butyl hydroperoxide [ 1.460 parts] and 5% solution of sodium formaldehyde sulfoxylate [ 1.016 parts] over 6 hours. A 50% solids emulsion of Irganox 1010 [0.098 parts], Irganox 245 [0.098 parts ] and dilauryl thiodipropionate [0.504 parts] is then added. Cool the batch to 60 °C.

The RI of the resulting modifier composition was measured to 1.570 ± 0.002, using ASTM-D-542.

### EXAMPLE 3

Charge 21.794 parts deionized water to a stainless steel reactor capable of withstanding 200 psi (1.38 mPa) pressure. Add 1.411 parts of a 5% aqueous solution of sodium formaldehyde sulfoxylate. Begin stirring at 175 rpm and heating to 85 °C while sparging with nitrogen for 30 minutes. At 85 °C, turn off sparge and add 3.934 parts (35% solids) of a Bd/S (at a ratio of approximately 70:30) seed emulsion, rinse with 0.519 parts deionized water. Evacuate the reactor to 362-414 mm Hg. Begin feeding an emulsified mix of monomers, soap and water to the reactor over a 5 hour period. The emulsified monomer mix contains: 23.335 parts S, 0.321 parts DVB, 1.738 parts Dowfax 2A1 soap [20% solid], 9.392 parts deionized water. Feed rates for the emulsified monomer mix change over time: 2 hours at 0.1512 parts / minute, 1.5 hour at 0.0338 parts/minute and 1.5 hours at 0.1512 parts / minute. Other feeds are started as follows: Bd [8.422 parts] is added in a shot plus a feed -- at 1 hour after the start of the emulsified monomers a shot of 0.804 parts is added , then a 1.5 hour feed at 0.0846 parts / minute is started at 2 hours after the start of the emulsified monomers; 1.847 parts of a 20% aqueous solution of Dowfax 2A1 soap is fed at a constant rate of 0.00616 parts/ minute for 5 hours; 2.117 parts of a 5% aqueous t-butyl hydroperoxide solution is added at a constant rate of 0.00504 parts/minute for 7 hours. At the end of monomer feeds, rinse with 1.038 parts deionized water. Continue feeding 5% aqueous t-butyl hydroperoxide-solution for 2 hours. Hold 30 minutes. Pressure should be 1.6 - 1.8 X10⁵ Pa. Vent to atmospheric pressure.

Charge 0.311 parts of a 5% solution of sodium formaldehyde sulfoxylate to the reactor. Begin feeding an emulsified styrene mix for 1 hour at 0.179 parts / minute [contains: 7.161 parts S. 0.527 parts Dowfax 2A1 soap, 3.051 parts deionized water (and 0.519 parts rinse of deionized water)]. Also feed 0.435 parts of a 5% solution of t-butyl hydroperoxide for one hour at 0.00725 parts / minute.

After 1 hour feed is in and rinse is added, begin a constant rate feed of emulsified monomers for 1 hour [ 6.287 parts S, 0.859 parts HEMA, 0.015 parts DVB, 0.527 parts Dowfax 2A1 soap [20% solids], 3.051 parts deionized water] (rinse with 0.519 parts deionized water)] and also a 1 hour constant rate feed of 0.435 parts of a 5% solution of t-butyl hydroperoxide solution. After the feeds are in, feed 0.435 parts of 5% solution of t-butyl hydroperoxide solution for one hour at constant rate. A 50% solids emulsion of Irganox 1010 [0.100 parts], Irganox 245 [0.100 parts] and dilauryl thiodipropionate [0.516 parts] is then added. Cool the batch to 60 °C.

The RI of the resulting modifier composition was measured to be 1.577 ± 0.002, using ASTM-D-542.

### EXAMPLE 4

23.467 parts deionized water was charged to a reactor capable of withstanding 1.38mPa pressure. 0.649 parts of a 5% aqueous solution of tetrasodium pyrophosphate and 0.001 part of an iron-EDTA chelate was added. The mix was stirred at 175rpm and heated to 85C . At 85C 2.325 parts (33% solids) of a seed particle emulsion was added, then rinsed with about 0.533 parts deionized water. The reactor was evacuated to 400 mm Hg. Several additions were started : a 2% aqueous solution of sodium formaldehyde sulfoxylate [3.109 parts] over 4.5hrs, a 5% aqueous t-butyl hydroperoxide- solution [1.867 parts] over 4.5 hrs., an emulsified mix of monomers, soap and water over a 4.5hr period. [the emulsified monomer mix contained: 14.961 parts styrene, 0.283 parts DVB, 2.734 parts of a solution of potassium oleate soap (15.5% solid), 3.733 parts deionized water (and 0.533 parts deionized water rinse)]. Addition rates for the emulsified monomer mix changed during the 4.5 hr feed time. 1,3 butadiene [13.012 parts] was added over time starting at 1.75 hrs after the start of the emulsified monomers . Addition rates for the butadiene changed during the 4.5 hr. At the end of the 4.5hr addition, 1.643 parts of a 2% solution of sodium formaldehyde sulfoxylate was added to the reactor over 2 hrs. Also an emulsified styrene charge was added over 2 hrs. The emulsified styrene mix contained: 12.267 parts styrene, 1.163 parts of a solution of potassium oleate soap [15.5% solid], 0.037 parts of t- butyl hydroperoxide, 2.667 parts deionized water [and 0.800 parts deionized water rinse]. At the end of these additions, 0.184 parts of a 2% solution of sodium formaldehyde sulfoxylate and 0.074 parts a 5% aqueous t-butyl hydroperoxide- solution was added over one hour. The reactor was vented to atmospheric pressure.

An emulsified monomer mix was added over 1 hr : 6.462 parts styrene , 0.883 parts hydroxyethyl methacrylate , 0.015 parts DVB , 0.022 parts t butyl hydroperoxide, 0.699 parts a solution of potassium oleate soap [15.5% solid], 2.667 parts deionized water (rinsed with 1.600 parts deionized water) . A 5% solution of t-butyl hydroperoxide [0.717 parts] and 2% solution of sodium formaldehyde sulfoxylate [0.893 parts] was added over 6 hrs.

A dispersion of Irganox 1010 [0.129 parts], Irganox 245 [0.129 parts ] and dilauryl thiodipropionate [0.662 parts] was added. The batch was cooled to 60C.

Isolation of this polymer to a powder form was accomplished by: adding the emulsion to a dilute acid solution [acids such as hydrochloric, sulfuric, phosphoric ] with agitation in a stirred tank; adjusting pH to neutral range with a base [such as sodium hydroxide, potassium hydroxide , etc.]; filtering the excess water ; additional washing steps can be done followed by filtering ; and drying the wet powder in a heated chamber [such as ovens , fluid bed dryers, etc.]

**TABLE 1**

| Modifier Example No. | Modifier Content (%) | Dynatup Impact Strength (J/m x10²) | | | | |
|---|---|---|---|---|---|---|
| | | Time in Oven at 60 °C (days) | | | | |
| | | 0 | 1 | 3 | 5 | 10 |
| control | 0 | 246 | 80.1 | 81.1 | 37.9 | 49.1 |
| 1 | 5 | 353 | 280 | 278 | 289 | 323 |
| 2 | 5 | 257 | 251 | 268 | 247 | 258 |
| 3 | 5 | 263 | 185 | 185 | 146 | 116 |
| 1 | 10 | 428 | 307 | 356 | 324 | 381 |
| 2 | 10 | 369 | 288 | 308 | 290 | 289 |
| 3 | 10 | 337 | 282 | 193 | 223 | 168 |

Table 1 reports the measured impact strength of APET blends containing the modifiers of Examples 1 through 3, compared to the impact strength of a control sample (i.e., Shell 8387 APET resin without the addition of modifier). The results illustrate that compositions within the scope of the present invention, such as the modifiers of Examples 2 and 3, provide the excellent impact resistance of compositions reported in U.S. Patent No. 5,321,056.

**TABLE 2**

| Modifier Example No. | Modifier Concentration (%) | % Transmission | % Haze | b | Scattered Yellowness Index |
|---|---|---|---|---|---|
| control | 0 | 89.5 | 0.8 | 0.8 | -21 |
| 1 | 5 | 87.2 | 2.6 | 4.6 | -226 |
| 2 | 5 | 88.5 | 2.8 | 3.1 | -197 |
| 3 | 5 | 87.8 | 3 | 1.8 | 2 |
| 1 | 10 | 87.2 | 3.3 | 4.2 | -224 |
| 2 | 10 | 88.9 | 4 | 2.3 | -178 |
| 3 | 10 | 88.2 | 3.6 | 1.6 | -17 |

Table 2 reports the measured optical properties of APET blends containing the modifiers of Examples 1 through 3, compared to the optical properties of the control sample. The results illustrate that compositions within the scope of the present invention, such as the modifiers of Examples 2 and 3, provide dramatically improved optical properties over the compositions reported in U.S. Patent No. 5,321,056.

### EXAMPLES 5 - 9

### Preparation of Core-Shell Impact Modifier Concentrates

Core-shell impact modifier concentrates were prepared by blending spray-dried impact modifier powder with amorphous polyethylene terephthalate pellets (APET - Shell 8387) and compounding the blend into pellets using a Leistritz counter-rotating intermeshing twin screw extruder (compounder). The compounder was set to run at 28:1 L/D and was configured to have a degassing port. The APET was dried at 120°C for 16 hrs prior to introduction to the compounder. The impact modifier was not predried. The concentrated impact modifier pellets were prepared using between 10% and 50% of the impact modifier of Example 2 (Table 3). The concentrates were stranded, cooled in a water bath, and cut into pellets. The integrity of the strand began to breakdown as the impact modifier concentration was increased greater than 50%. It is expected that pellets having between 50% and 80% impact modifier can be prepared using a suitable underwater pelletizing process known in the art wherein the melt strands are extruded directly in a water bath and "chopped" by a rotating high speed knife into short length pellets.

**TABLE 3**

| **Concentrates of the Core-Shell Impact Modifier of Ex. 2** | | | |
|---|---|---|---|
| **Ex.** | **Modifier Concentration (%)** | **% Polyester APET (Shell 8300)** | **Strand Integrity** |
| 5 | 10 | 90 | good |
| 6 | 20 | 80 | good |
| 7 | 30 | 70 | good |
| 8 | 40 | 60 | good |
| 9 | 50 | 50 | increased breakage |

### EXAMPLES 10-18

The concentrated impact modifier pellets prepared in examples 5-9 were subsequently re-crystallized by heating the pellets to 120°C for 3-4 hours in a tray, in a desiccating oven by circulating the air over a desiccant to maintain the dew point of the air below -40°C. The re-crystallized pellets were subsequently stored in drums until ready to use for preparing sheet. The concentrate pellets were subsequently dried at 120°C just prior to extruding with additional APET. The concentrated modifier was added to an appropriate amount of APET to attain either a 5 or 10% total impact modifier amount (by weight) in the polyester sheet. The polyester blends described in Table 4 were extruded using a 27mm Leistritz twin screw extruder and formed into sheet using a 15 cm (6 inch) die. Sheets of these blends were aged up to 10 days at 60°C and tested for their impact properties (total energy to break and ductile versus brittle break percentage). As shown in Table 4, impact-modified sheet prepared from the concentrated impact modifiers of Examples 6 to 9 have comparable impact properties compared to sheet prepared directly from the powdered impact modifier of Example 2.

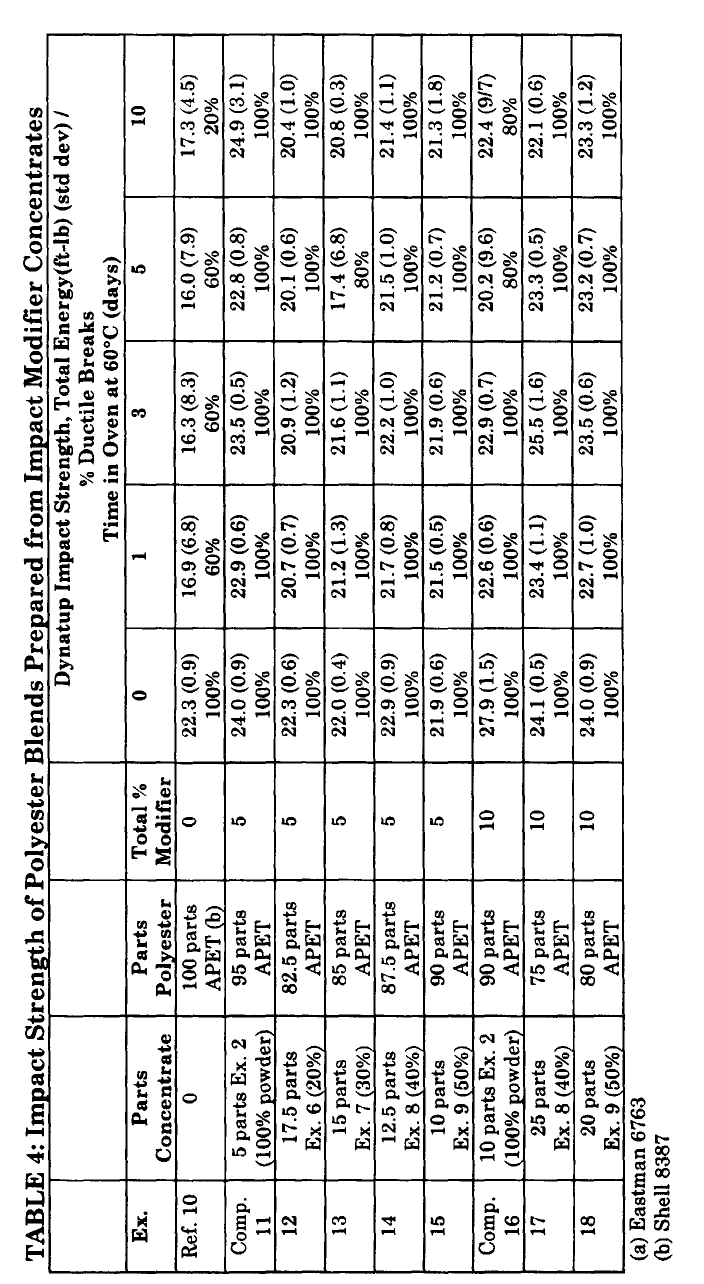

### EXAMPLES 19 - 28

APET sheets prepared with impact modifier concentrates and powders (based on Example 2 impact modifier) were also tested for clarity. Modified APET sheet having a nominal thickness of 0.75 mm (30 mil) was extruded from an 20 cm (8 inch) die using a 38 mm (1.5 inch) Killion single screw extruder operated at the following conditions: Barrel Zones 1 to 5 temperature: 233°C - 247°C; 105 RPM; Melt temperature: 267°C - 271°C; Die temperature: 246°C; Chilled Roller temperature: 16°C.

Clarity of the sheet was determined by "contact" clarity and "see-through" clarity. Contact clarity was determined by the ability to read printed black text on white paper through a modified APET sheet specimen that is in contact with the paper. A contact clarity rating of "good" was provided where the printed page was clearly readible. All samples tested had good contact clarity.

See-through clarity was determined by the ability to read printed black text on white paper through a modified APET sheet specimen that is a distance of one meter or more from the paper. A see-through clarity rating of "good" was provided where the printed page was clearly readible. A see-through clarity rating of "poor" was provided where the printed page was not readible.

The results shown in Table 5 indicate that all of the modified APET sheets prepared from the impact modifier concentrates of Examples 5 to 9 using a single screw extruder had good see-through clarity, whereas the sheet modified with the powder of Example 2 using a single screw extruder had poor see-through clarity. These results illustrate that the concentrated impact modifiers of the present invention disperse better in APET compared to powdered impact modifiers in single screw extruders.

**TABLE 5**

| **Optical Properties of Impact Modified Polyester Sheet: Concentrate vs. Powder Using Single Screw Extruder** | | | | | |
|---|---|---|---|---|---|
| | | | | **Clarity** | |
| **Ex.** | **Modifier, parts / source** | **APET parts / source** | **Total Modifier %** | **Contact** | **See- Through** |
| Ref. 19 | None | 100 (a) | 0 | good | good |
| Comp. 20 | 5 Ex. 2 (powder) | 95 (a) | 5 | good | poor (d) |
| | | | | | good (e) |
| 21 | 50 Ex. 5 (10% conc.) | 50(b) | 5 | good | good |
| 22 | 25 Ex. 6 (20% conc.) | 75 (b) | 5 | good | good |
| 23 | 16.7 Ex. 7 (30% conc.) | 83.3 (c) | 5 | good | good |
| 24 | 12.5 Ex. 8 (40% conc.) | 87.5 (c) | 5 | good | good |
| 25 | 10 Ex. 9 (50% conc.) | 90 (c) | 5 | good | good |
| 26 | 33.3 Ex. 7 (30% conc.) | 66.7 (c) | 10 | good | good |
| 27 | 25 Ex. 8 (40% cone.) | 75 (c) | 10 | good | good |
| 28 | 20 Ex. 9 (50% conc.) | 80 (c) | 10 | good | good |

| | | | | | |
|---|---|---|---|---|---|
| (a) NTM, Inc., Greenville, SC, Intrinsic Viscosity (IV) = 0.80 - 0.85 dL/g | | | | | |
| (b) CRYSTAR 5005, Dupont, Wilmington, DE, IV = 0.85 dL/g | | | | | |
| (c) Shell APET 8300, IV = 0.83 dL/g | | | | | |
| (d) Sheet surface was rough and had a dull appearance. | | | | | |
| (e) Twin screw extruder used - sheet surface was smooth and clear. | | | | | |

## Claims

1. A core-shell impact modifier concentrate comprising:
(I) from 20 to 70 parts of at least one amorphous aromatic polyester or copolyester having a refractive index of from 1.55 to 1.60; and
(II) from 30 to 80 parts of at least one core-shell impact modifier comprising
(A) from 15 to 85 parts of a core comprising from 40 to 60 percent by weight of units derived from at least one vinyl aromatic monomer, from 20 to 60 percent by weight of units derived from at least one 1,3-diene, up to 10 percent by weight of units derived from at least one copolymerizable vinyl or vinylidene monomer, and up to 5 percent by weight of at least one graft-linking or cross-linking monomer;
(B) from 10 to 50 parts of an intermediate stage comprising at least 25 percent by weight of units derived from at least one vinyl aromatic monomer; and
(C) from 5 to 35 parts of an outer shell comprising from 2 to 40 percent by weight of units derived from at least one hydroxyalkyl (meth)acrylate, from 60 to 98 percent by weight of units derived from at least one vinyl aromatic monomer, and up to 25 percent by weight in the shell of units derived from one or more copolymerizable vinyl or vinylidene monomer, and up to 5 percent by weight of units derived from at least one graft-linking or cross-linking monomer;
the core-shell impact modifier having a refractive index of from 1.55 to 1.60.

2. The core-shell impact modifier concentrate according to claim 1 wherein the at least one amorphous aromatic polyester or copolyester is present in the range of from 30 to 65 parts.

3. The core-shell impact modifier concentrate according to claim 1 wherein the at least one amorphous aromatic polyester or copolyester is present in the range of from 30 to 50 parts.

4. The core-shell impact modifier concentrate according to claim 1 wherein the aromatic polyester or copolyester is selected from the group consisting of poly(ethylene terephthalate) and (poly(ethylene-co-1,4- cyclohexane dimethylene terephthalate).

5. The core-shell impact modifier concentrate of claim 1 wherein the core (A) comprises
(1) from 10 to 50 parts based upon the impact modifier of an inner stage comprising at least 80 percent of units derived form at least one vinyl aromatic monomer, up to 20 percent of units derived from at least one other copolymerizable vinyl or vinylidene monomer, up to 20 percent by weight of units derived from at least one 1,3-diene, and up to 5 percent by weight of units derived from at least one graft-linking or cross-linking monomer; and
(2) from 5 to 75 parts based upon the impact modifier of an outer stage comprising up to 60 percent by weight of units derived from a vinyl aromatic monomer, at least 30 percent by weight of units derived from at least one 1,3-diene, up to 10 percent by weight of units derived from at least one copolymerizable vinyl or vinylidene monomer, and up to 5 percent by weight of units derived from at least one graft-linking or cross-linking monomer.

6. The core-shell impact modifier concentrate of claim 1 wherein the outer shell (C) comprises a plurality of stages.

7. The core-shell impact modifier concentrate of claim 1, wherein; the vinyl aromatic monomer is selected from the group consisting of styrene, para-methyl styrene, alpha-methyl styrene, chlorostyrene, vinyl toluene, bromostyrene, dibromostyrene, tribromostyrene, iso-propenyl napthalene, and vinyl naphthalene; and wherein the 1,3-diene is butadiene.

8. A core-shell impact modifier concentrate comprising:
(I) from 50 to 70 parts of at least one amorphous aromatic polyester or copolyester having a refractive index of from 1.55 to 1.60; and
(II) from 30 to 50 parts of a core-shell impact modifier comprising
(A) from 50 to 70 parts of a core comprising
(1) from 10 to 50 parts based upon the core-shell impact modifier of an inner stage comprising at least 80 percent of units derived from styrene, up to 20 percent of units derived from at least one other copolymerizable vinyl or vinylidene monomer, up to 20 percent by weight of units derived from 1,3-butadiene, and up to 5 percent by weight of units derived from at least one graft-linking or cross-linking monomer; and
(2) from 5 to 75 parts based upon the impact modifier of an outer stage comprising up to 60 percent by weight of units derived from styrene, at least 30 percent by weight of units derived from 1,3-butadiene, up to 10 percent by weight of units derived from at least one copolymerizable vinyl or vinylidene monomer, and up to 5 percent by weight of units derived from at least one graft-linking or cross-linking monomer;
(B) from 20 to 30 parts of an intermediate stage comprising at least 25 percent by weight of units derived from styrene; and
(C) from 10 to 20 parts of an outer shell comprising from 2 to 40 percent by weight of units derived from hydroxyethyl (meth)acrylate, from 60 to 98 percent by weight of units derived from styrene, and up to 25 percent by weight in the shell of units derived from one or more copolymerizable vinyl or vinylidene monomer, and up to 5 percent by weight of units derived from at least one graft-linking or cross-linking monomer;
the core-shell impact modifier having a refractive index of from 1.55 to 1.60.

9. The concentrate according to claim 8 in the form of a pellet.

10. A clear amorphous polyester or copolyester blend comprising
(a) from 10 to 90 parts of an amorphous aromatic polyester or copolyester having a refractive index of from about 1.55 to about 1.60; and
(b) from 10 to 90 parts of a core-shell impact modifier concentrate comprising;
(I) from 20 to 90 parts of at least one amorphous aromatic polyester or copolyester having a refractive index of from 1.55 to 1.60; and
(II) from 10 to 80 parts of at least one core-shell impact modifier comprising
(A) from 15 to 85 parts of a core comprising from 40 to 60 percent by weight of units derived from at least one vinyl aromatic monomer, from 20 to 60 percent by weight of units derived from at least one 1,3-diene, up to 10 percent by weight of units derived from at least one copolymerizable vinyl or vinylidene monomer, and up to 5 percent by weight of at least one graft-linking or cross-linking monomer;
(B) from 10 to 50 parts of an intermediate stage comprising at least 25 percent by weight of units derived from at least one vinyl aromatic monomer; and
(C) from 5 to 35 parts of an outer shell comprising from 2 to 40 percent by weight of units derived from at least one hydroxyalkyl (meth)acrylate, from 60 to 98 percent by weight of units derived from at least one vinyl aromatic monomer, and up to 25 percent by weight in the shell of units derived from one or more copolymerizable vinyl or vinylidene monomer, and up to 5 percent by weight of units derived from at least one graft-linking or cross-linking monomer;
wherein the total weight ratio of impact modifier to amorphous polyester or copolyester in the blend is in the range of from 1/99 to 30/70.

11. Articles produced from the blend of claim 10.

12. A process for a preparing a core-shell impact modifier concentrate pellet comprising the steps of:
(a) melt blending
from 10 to 90 parts of a core-shell impact modifier having a refractive index of from about 1.55 to about 1.60, with
from 10 to 90 parts of an amorphous aromatic polyester or copolyester having a refractive index of from about 1.55 to about 1.60; and
(b) pelletizing the melt blend;
wherein the core-shell impact modifier comprises:
(A) from 15 to 85 parts of a core comprising from 40 to 60 percent by weight of units derived from at least one vinyl aromatic monomer, from 20 to 60 percent by weight of units derived from at least one 1,3-diene, up to 10 percent by weight of units derived from at least one copolymerizable vinyl or vinylidene monomer, and up to 5 percent by weight of at least one graft-linking or cross-linking monomer;
(B) from 10 to 50 parts of an intermediate stage comprising at least 25 percent by weight of units derived from at least one vinyl aromatic monomer; and
(C) from 5 to 35 parts of an outer shell comprising from 2 to 40 percent by weight of units derived from at least one hydroxyalkyl (meth)acrylate, from 60 to 98 percent by weight of units derived from at least one vinyl aromatic monomer, and up to 25 percent by weight in the shell of units derived from one or more copolymerizable vinyl or vinylidene monomer, and up to 5 percent by weight of units derived from at least one graft-linking or cross-linking monomer.
